# EUROPÄISCHE PATENTSCHRIFT

(11) **EP 2 243 650 B1**
(45) Veröffentlichungstag und Bekanntmachung des Hinweises auf die Patenterteilung: **20.07.2016**
(21) Anmeldenummer: 10004222.5
(22) Anmeldetag: 21.04.2010
(51) Int. Cl.: B60J 10/00

(54) **Blendenanordnung für ein KFZ-Fenster**
Decoration strip arrangement for a motor vehicle window
Arrangement d'enjoliveur pour une fenêtre de véhicule automobile

(30) Priorität: 24.04.2009 DE 102009018830
(43) Veröffentlichungstag der Anmeldung: 27.10.2010
(73) Patentinhaber: DURA Automotive Body and Glass Systems GmbH, 58840 Plettenberg (DE)
(72) Erfinder: Rau, Holger, 51580 Reichshof (DE); Frommann, Peter, 58840 Plettenberg (DE)
(74) Vertreter: Zinnecker, Armin

(56) Entgegenhaltungen:
- EP-A2- 1 759 903
- EP-A2- 1 920 963
- DE-A1- 10 335 942
- DE-A1- 19 922 749
- DE-C1- 10 134 465

## Beschreibung

Die Erfindung betrifft eine Blendenanordnung für ein Fenster eines Fahrzeugs, insbesondere eines Kraftfahrzeugs, mit einer Fensterrahmen-Blende und mit einer Fensterführung, die von der Fensterrahmen-Blende gehalten wird. Die Erfindung ist für bewegliche Fenster geeignet, insbesondere für versenkbare Fenster von Fahrzeugen bzw. Kraftfahrzeugen. Das Fenster kann sich in der Türe oder in der Karosserie des Fahrzeugs bzw. Kraftfahrzeugs befinden.

Die Fensterführung übernimmt für das insbesondere bewegliche Fenster eine Führungsfunktion und eine Dichtungsfunktion. Um diese Funktionen erfüllen zu können folgt die Fensterführung dem Verlauf der zugehörigen Kante des insbesondere beweglichen Fensters. Die Fensterführung wird ihrerseits von der Fensterrahmen-Blende gehalten und geführt. Damit übernimmt die Fensterrahmen-Blende ebenfalls die Führung des insbesondere beweglichen Fensters und ist auf diese Weise an den Verlauf des vorzugsweise beweglichen Fensters bzw. dessen Kante gebunden. Hierdurch ist das Design der Fensterrahmen-Blende in bestimmten Grenzen vorgegeben.

Die DE-10134465 offenbart eine Blendenanordnung nach dem Oberbegriff des Anspruchs 1.

Die DE-19222749 zeigt eine weitere Blendenanordnung für eine Fensterscheibe eines Fahrzeugs.

Aufgabe der Erfindung ist es, bei einer Blendenanordnung der eingangs angegebenen Art den Abstand zwischen der Fensterrahmen-Blende und dem Fensterrahmen oder einer angrenzenden Türe oder einer angrenzenden Karosserie zu verringern und das optische Erscheinungsbild zu verbessern.

Erfindungsgemäß wird diese Aufgabe durch die Merkmale des Anspruchs 1 gelöst. Zwischen der Fensterrahmen-Blende und der Fensterführung ist ein Halteteil angeordnet. Durch dieses Halteteil kann die Form der Fensterrahmen-Blende freier gestaltet werden. Die Fensterrahmen-Blende ist nicht mehr streng an die Form der Fensterführung bzw. der Kante des insbesondere beweglichen Fensters gebunden. Damit besteht beim Design der Fensterrahmen-Blende eine größere Freiheit, wodurch das optische Erscheinungsbild der Blendenanordnung und/oder des Fahrzeugs bzw. Kraftfahrzeugs verbessert werden kann. Insbesondere kann ein Design gewählt werden, bei dem der Verlauf der Fensterrahmen-Blende dem Verlauf der angrenzenden Seitenwand bzw. des angrenzenden Fensterrahmens des Fahrzeugs bzw. Kraftfahrzeugs, insbesondere der Fahrzeugkarosserie oder der Fahrzeugtüre, folgt. Es ist insbesondere möglich, den Verlauf der Fensterrahmen-Blende derart auszugestalten, daß der Abstand zwischen einer oder der Sichtfläche der Fensterrahmen-Blende und einer oder der Sichtfläche der angrenzenden Türe oder der angrenzenden Karosserie über die gesamte Länge der Fensterrahmen-Blende gleich bleibt.

Das Halteteil ist über seine Länge keilförmig. Je nach dem Verlauf der Kontur des Fensters bzw. der von der Fensterführung aufgenommenen Kante des Fensters kann das Halteteil durchgehend, also über seine gesamte Länge, keilförmig sein. Es können sich allerdings auch keilförmige Bereiche mit nicht-keilförmigen, ebenen Bereichen und/oder in einem entgegengesetzten Sinn keilförmigen Bereichen abwechseln. Der Keilwinkel kann über die gesamte Länge des Halteteils gleich groß sein.

Vorteilhafte Weiterbildungen sind in den Unteransprüchen beschrieben.

Vorteilhaft ist es, wenn das Halteteil eine Nase aufweist. Die Nase kann in eine an der Fensterführung vorgesehene Nut eingreifen. Es ist allerdings auch die umgekehrte Anordnung möglich, bei der die Fensterführung eine Nase und das Halteteil eine entsprechende Nut aufweist.

Vorteilhaft ist es, wenn das Halteteil eine Nut aufweist. Die Nut befindet sich vorzugsweise auf derjenigen Seite des Halteteils, die der Nase gegenüberliegt. In die Nut kann eine Nase oder ein Vorsprung, die oder der an der Fensterrahmen-Blende vorgesehen ist, eingreifen. In der Nut kann eine Stufe vorgesehen sein, durch die eine weitere Haltefunktion in der Längsrichtung der Nut bzw. des Halteteils bewirkt werden kann.

Die Erfindung betrifft ferner ein Fahrzeug, insbesondere ein Kraftfahrzeug, das durch eine oder mehrere erfindungsgemäße Blendenanordnungen gekennzeichnet ist.

Ein Ausführungsbeispiel der Erfindung wird nachstehend anhand der beigefügten Zeichnung im Einzelnen erläutert. In der Zeichnung zeigt
- Fig. 1: einen Teil eines Fensters eines Kraftfahrzeugs mit einer vorbekannten Blendenanordnung in einer perspektivischen Ansicht,
- Fig. 2: einen Teil eines Fensters eines Kraftfahrzeugs mit einem Ausführungsbeispiel einer erfindungsgemäßen Blendenanordnung in einer perspektivischen Ansicht,
- Fig. 3: einen Schnitt durch die Blendenanordnung gemäß Fig. 1,
- Fig. 4: einen Schnitt durch die Blendenanordnung gemäß Fig. 2 und
- Fig. 5: das keilförmige Halteteil gemäß Fig. 2 und 4 in einer perspektivischen Darstellung.

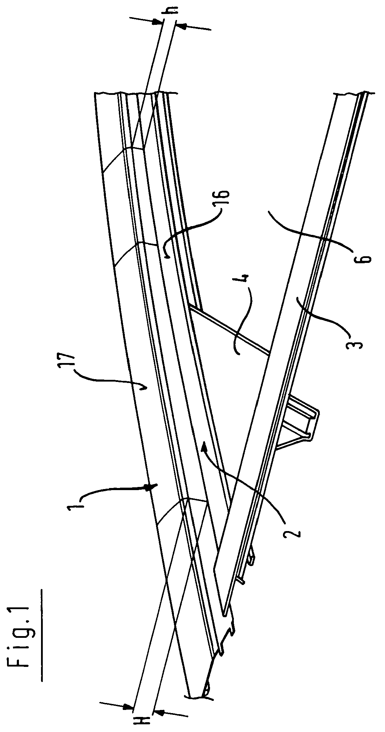

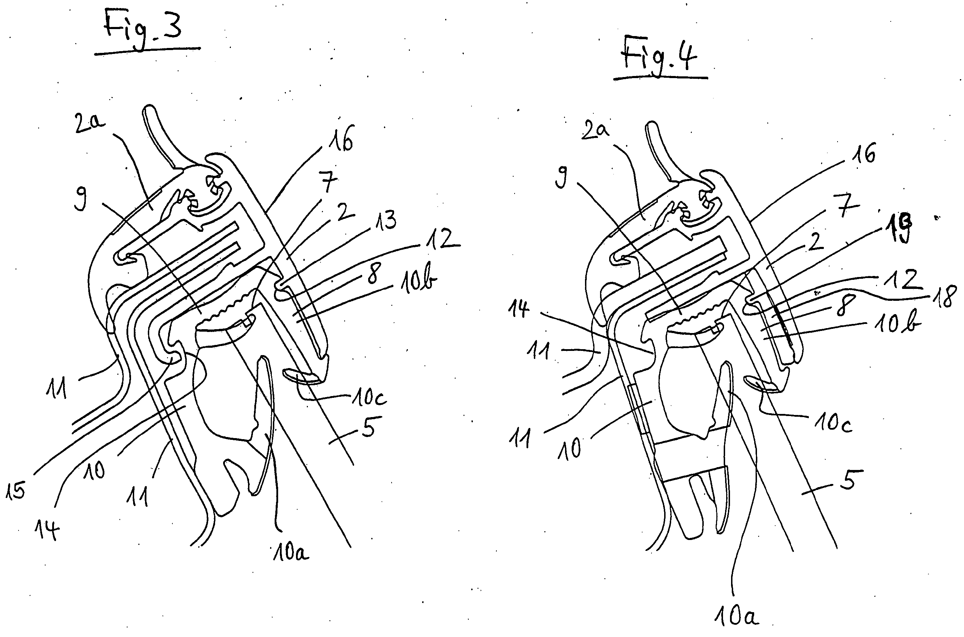

Die in Fig. 1 und 3 teilweise dargestellte Fahrzeugtüre umfaßt einen Fensterrahmen 1, eine Fensterrahmen-Blende 2, eine Schachtblende 3 und ein Spiegeldreieck 4, an dem ein Rückspiegel befestigbar ist. Die Fensterscheibe 5 füllt bei geschlossenem Fenster die Fensteröffnung 6 aus. Die Fensterscheibe 5 durchdringt die Schachtblende 3. Bei geschlossenem Fenster liegt die Oberkante 7 der Fensterscheibe 5 in der Fensterrahmen-Blende 2. Die Fensterrahmen-Blende 2 folgt dem Verlauf der Oberkante 7 der Fensterscheibe 2. Wenn das Fenster geöffnet wird, wird die Fensterscheibe 5 nach unten durch die Schachtblende 3 hindurch bewegt. Die Fensterscheibe 5 ist auf diese Weise in der Türe versenkbar.

Wie aus Fig. 3 ersichtlich ist innerhalb der Fensterrahmen-Blende 2 eine Fensterführung 8 angeordnet. Die Fensterführung 8 hat einen U-förmigen Querschnitt. Ihre Basis 9 liegt der Oberkante 7 der Fensterscheibe 5 gegenüber. Der innere Schenkel 10 der Fensterführung 8 verläuft parallel zu einem entsprechenden Abschnitt des Türblechs 11. Am Ende des inneren Schenkels 10 ist eine nach innen weisende, schräg verlaufende Dichtungsleiste 10a vorgesehen, insbesondere angeformt, die im geschlossenen Zustand des Fensters, in dem die Fensterscheibe 5 in der Fensterführung 8 liegt, wie in Fig. 3 und 4 gezeigt, an der Innenseite der Fensterscheibe 5 anliegt. Der äußere Schenkel 10b der Fensterführung 8 weist ebenfalls eine nach innen gerichtete Dichtungsleiste 10c auf, die im geschlossenen Zustand des Fensters an der Außenseite der Fensterscheibe 5 anliegt.

Der äußere Schenkel 10b der Fensterführung 8 weist ferner eine Nut 12 auf, in die eine Nase 13 der Fensterrahmen-Blende 2 eingreift. Der innere Schenkel 10 der Fensterführung 8 weist eine weitere Nut 14 auf, in die das U-förmig abgebogene Ende 15 eines Schenkels der Fensterrahmen-Blende 2 eingreift. Auf diese Weise wird die Fensterführung 8 von der Fensterrahmen-Blende 2 gehalten. Die Fensterrahmen-Blende 2 ist ihrerseits an den beiden Schenkeln des Türblechs 11 befestigt. Sie ist im Querschnitt U-förmig oder L-förmig, wie in Fig. 3 und 4 gezeigt, mit einer Verlängerung, an der eine Dichtung 2a zur Abdichtung der Fensterrahmen-Blende 2 gegenüber einem Karosserieteil oder einem Fensterrahmen vorzugsweise lösbar befestigt ist.

Wie aus Fig. 1 ersichtlich folgt die Fensterrahmen-Blende 2 dem Verlauf der Oberkante 7 der Fensterscheibe 5. Der Abstand zwischen der Sichtfläche 16 der Fensterrahmen-Blende 2 und der Sichtfläche 17 des Fensterrahmens 1 wird mit zunehmender Annäherung an das untere Ende der Fensterrahmen-Blende 2 im Bereich des Spiegeldreiecks 4 größer. In Fig. 1 ist dieser Abstand H im Endbereich der Fensterrahmen-Blende 2 im Bereich der Spiegelblende 4 eingezeichnet. In einem Abstand von der Spiegelblende 4 hat sich dieser Abstand auf das Maß h vermindert.

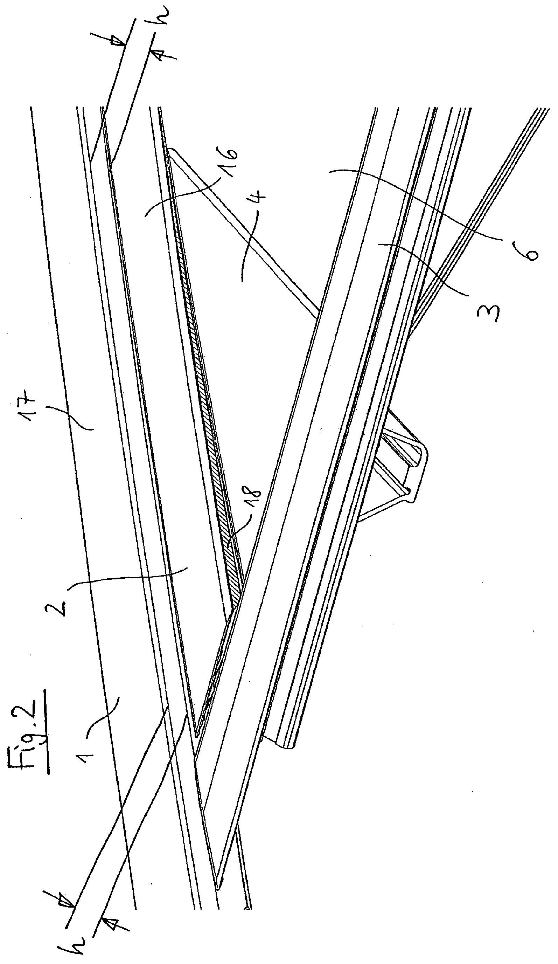

Um diesen Abstand zu vergleichmäßigen und auf diese Weise ein harmonischeres Design zu erreichen ist zwischen der Fensterrahmen-Blende 2 und der Fensterführung 8 gemäß Fig. 2, 4 und 5 ein Halteteil 18 angeordnet. Das Halteteil 18 ist keilförmig. Die Stärke des Halteteils 18 nimmt in Längsrichtung durchgehend, also über die gesamte Länge des Halteteils 18 zu. Diese Stärke beträgt an dem dem Spiegeldreieck 4 abgewandten Ende des Halteteils 18 lediglich d. An dem im Bereich des Spiegeldreiecks 4 liegenden Ende beträgt die Stärke D. Der Verlauf der Stärke des Halteteils 18 ist derart gewählt, daß der Abstand h zwischen der Sichtfläche 16 der Fensterrahmen-Blende 2 und der Sichtfläche 17 des Fensterrahmens 1 über den gesamten Verlauf der Fensterrahmen-Blende 2 konstant den Wert h einnimmt, wie in Fig. 2 gezeigt.

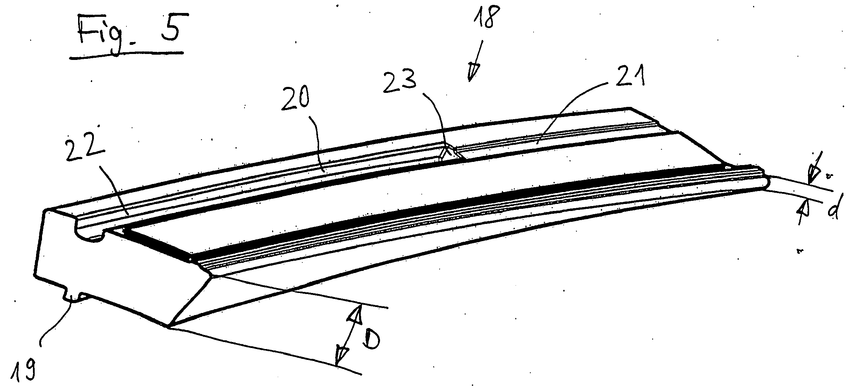

Wie insbesondere aus Fig. 4 und 5 ersichtlich weist das Halteteil 18 auf seiner der Fensterführung 8 zugewandten Seite eine Nase 19 auf, die in die Nut 12 an der Außenseite des äußeren Schenkels 10b der Fensterführung 8 eingreift. Auf seiner gegenüberliegenden, der Fensterführung 8 abgewandten und der Fensterrahmen-Blende 2 zugewandten Seite weist das Halteteil 18 eine Nut 20 auf, in die eine Nase der Fensterrahmen-Blende 2 eingreift. Die Nut 20 umfaßt einen ersten Abschnitt 21 mit einer geringeren Nuttiefe und einen zweiten Abschnitt 22 mit einer größeren Nuttiefe, die voneinander durch eine Stufe 23 getrennt sind. Die Stufe 23 kann eine weitere Haltefunktion in der Längsrichtung des Halteteils 18 übernehmen.

Die Erfindung kann bei einem versenkbaren Fenster in der Karosserie oder Türe eines Fahrzeugs oder Kraftfahrzeugs verwendet werden. Das versenkbare Fenster wird durch die Fensterführung 8 abgedichtet und geführt. Die Fensterführung 8 wird von der Fensterrahmen-Blende 2 gehalten und geführt. Um einen vom Design her gewünschten, harmonischen Verlauf zwischen der Seitenwand des Fahrzeugs bzw. dem Fensterrahmen einerseits und der Fensterrahmen-Blende andererseits zu erreichen, ist das Halteteil vorgesehen, durch das der Verlauf der Fensterrahmen-Blende geändert und an die Seitenwand des Fahrzeugs bzw. den Fensterrahmen angepaßt werden kann. Das keilförmige Halteteil 18 umfaßt eine Nase 19, um die Führungsfunktion der Fensterrahmen-Blende 2 aufrechtzuerhalten. Das Halteteil 18 ist über seine Länge keilförmig gestaltet, so daß der Verlauf der Fensterrahmen-Blende 2 harmonisch wirkt. Auf diese Weise ist es möglich, daß die Fensterrahmen-Blende 2 dem Fensterrahmen bzw. dem Seitenrahmen bzw. der Zierleiste des Seitenrahmens folgt, wie dies aus optischen Gründen erwünscht ist. Durch das Halteteil kann die Haltefunktion und Dichtungsfunktion aufrechterhalten werden. Durch die Erfindung werden dem Design neue Möglichkeiten gegeben. Die Fensterrahmen-Blende kann den Versatz zwischen der Seitenwand bzw. dem Fensterrahmen und dem versenkbaren Fenster ausgleichen.

## Patentansprüche

1. Blendenanordnung für ein Fenster eines Fahrzeugs, insbesondere eines Kraftfahrzeugs, mit einem Fensterrahmen (1), mit einer Fensterrahmen-Blende (2), die eine Sichtfläche (16) aufweist, und mit einer Fensterführung (8), die von der Fensterrahmen-Blende (2) gehalten wird, wobei zwischen der Fensterrahmen-Blende (2) und der Fensterführung (8) ein Halteteil (18) angeordnet ist,
**dadurch gekennzeichnet,**
**dass** das Halteteil (18) über seine Länge keilförmig ist, wobei der Verlauf der Stärke des Halteteils (18) derart gewählt ist, dass der Abstand (h) zwischen der Sichtfläche (16) der Fensterrahmen-Blende (2) und der Sichtfläche (17) des Fensterrahmens (1) oder einer Sichtfläche der angrenzenden Türe oder einer Sichtfläche der angrenzenden Karosserie über den gesamten Verlauf der Fensterrahmen-Blende (2) einen konstanten Wert (h) einnimmt.

2. Blendenanordnung nach Anspruch 1, **dadurch gekennzeichnet, dass** das Halteteil (18) eine Nase (19) aufweist.

3. Blendenanordnung nach einem der vorhergehenden Ansprüche, **dadurch gekennzeichnet, daß** das Halteteil (18) eine Nut (20) aufweist.

4. Fahrzeug, insbesondere Kraftfahrzeug, **gekennzeichnet durch** eine oder mehrere Blendenanordnungen nach einem oder mehreren der Ansprüche 1 bis 3.

## Claims

1. A trim arrangement for a window of a vehicle, in particular of a motor vehicle, having a window frame (1), having a window frame trim (2) which has a visible surface (16) and having a window guide (8) which is held by the window frame trim (2), wherein a holding part (18) is arranged between the window frame trim (2) and the window guide (8),
**characterized in that** the holding part (18) is wedge-shaped over its length, with the extent of the thickness of the holding part (18) being selected such that the spacing (h) between the visible surface (16) of the window frame trim (2) and the visible surface (17) of the window frame (1) or a visible surface of the adjacent door or a visible surface of the adjacent body constantly adopts a constant value (h) over the total extent of the window frame trim (2).

2. A trim arrangement in accordance with claim 1, **characterized in that** the holding part (18) has a nose (19).

3. A trim arrangement in accordance with one of the preceding claims, **characterized in that** the holding part (18) has a groove (20).

4. A vehicle, in particular a motor vehicle, **characterized by** one or more trim arrangements in accordance with one or more of the claims 1 to 3.

## Revendications

1. Arrangement d'enjoliveur pour une fenêtre d'un véhicule, en particulier d'un véhicule automobile, comprenant un cadre de fenêtre (1), un enjoliveur de cadre de fenêtre (2), qui comporte une surface visible (16), et une coulisse de fenêtre (8), qui est maintenue par l'enjoliveur de cadre de fenêtre (2), une pièce de maintien (18) étant disposée entre l'enjoliveur de cadre de fenêtre (2) et la coulisse de fenêtre (8),
**caractérisé en ce que**
la pièce de maintien (18) est en forme de coin sur sa longueur, le tracé de l'épaisseur de la pièce de maintien (18) étant choisi de telle manière que l'écart (h) entre la surface visible (16) de l'enjoliveur de cadre de fenêtre (2) et la surface visible (17) du cadre de fenêtre (1) ou une surface visible de la portière adjacente ou une surface visible de la carrosserie adjacente prend une valeur (h) constante sur tout le tracé de l'enjoliveur de cadre de fenêtre (2).

2. Arrangement d'enjoliveur selon la revendication 1, **caractérisé en ce que** la pièce de maintien (18) comporte un ergot (19).

3. Arrangement d'enjoliveur selon l'une des revendications précédentes, **caractérisé en ce que** la pièce de maintien (18) comporte une rainure (20).

4. Véhicule, en particulier véhicule automobile, **caractérisé par** un ou plusieurs arrangements d'enjoliveur selon l'une ou plusieurs des revendications 1 à 3.
